# FASCICULE DE BREVET EUROPEEN

(11) **EP 3 494 085 B1**
(45) Date de publication et mention de la délivrance du brevet: **02.03.2022**
(21) Numéro de dépôt: 17822387.1
(22) Date de dépôt: 07.12.2017
(51) Int. Cl.: C01B 21/086, C01B 21/093

(54) **PROCÉDÉ DE SÉCHAGE ET DE PURIFICATION DU SEL DE LITHIUM DE BIS(FLUOROSULFONYL)IMIDE**
VERFAHREN ZUR TROCKNUNG UND REINIGUNG VON LITHIUM-BIS(FLUORSULFONYL)IMID-SALZ
METHOD FOR DRYING AND PURIFYING LITHIUM BIS(FLUOROSULFONYL)IMIDE SALT

(30) Priorité: 08.12.2016 FR 1662129
(43) Date de publication de la demande: 12.06.2019
(73) Titulaire: ARKEMA FRANCE, 92700 Colombes (FR)
(72) Inventeur: SCHMIDT, Grégory, 69700 Saint Andeol le Château (FR); TEISSIER, Rémy, 69340 Francheville (FR)
(74) Mandataire: Arkema Patent
(86) Numéro de dépôt international: PCT/FR2017/053446
(87) Numéro de publication internationale: WO 2018/104674

(56) Documents cités:
- EP-A1- 2 505 551
- EP-A1- 2 578 533
- EP-A1- 2 662 332
- EP-A1- 2 977 349
- WO-A1-2015/158979
- JP-A- 2014 516 907
- JP-A- 2015 051 805

## Description

### DOMAINE DE L'INVENTION

La présente invention concerne le domaine des batteries Li-ion. Plus particulièrement, l'invention a trait à un procédé de séchage et purification d'un sel de lithium de bis(fluorosulfonyl)imide.

L'invention concerne aussi un procédé de fabrication d'un sel de lithium de bis(fluorosulfonyl)imide, séché et purifié par le procédé de séchage et purification selon l'invention.

La présente invention concerne également un sel de lithium de bis(fluorosulfonyl)imide comprenant une teneur réduite en eau, et ses diverses utilisations.

Le marché des batteries Li-ion nécessite de développer des batteries de plus forte puissance. Cela passe par l'augmentation du voltage nominal des batteries Li-ion. Pour atteindre les voltages visés, des électrolytes de grande pureté sont nécessaires. Les anions de type sulfonylimide, de par leur très faible basicité, sont de plus en plus utilisés dans le domaine du stockage d'énergie sous forme de sels inorganiques dans les batteries, ou de sels organiques dans les super condensateurs ou dans le domaine des liquides ioniques.

Dans le domaine spécifique des batteries Li-ion, le sel actuellement le plus utilisé est le LiPF₆. Ce sel montre de nombreux désavantages tels qu'une stabilité thermique limitée, une sensibilité à l'hydrolyse et donc une plus faible sécurité de la batterie. Récemment de nouveaux sels possédant le groupement fluorosulfonyl FSO₂⁻ ont été étudiés et ont démontré de nombreux avantages comme une meilleure conductivité ionique et une résistance à l'hydrolyse. L'un de ces sels, le LiFSI a montré des propriétés très intéressantes qui font de lui un bon candidat pour remplacer le LiPF₆.

L'identification et la quantification des impuretés dans les sels et/ou électrolytes, et la compréhension de leurs impacts sur les performances de la batterie deviennent primordiales. Par exemple, les impuretés possédant un proton mobile, en raison de leur interférence avec les réactions électrochimiques, conduisent à des performances et une stabilité globale moindre des batteries Li-ion. L'application des batteries Li-ion nécessite d'avoir des produits de haute pureté (minimum d'impuretés et en particulier ayant un taux d'humidité résiduel très faible).

Le document US 9079780 décrit des méthodes différentes de concentration de LiFSI, pour remédier à la formation de sous-produits :
- séchage sous courant de gaz inerte et sec ;
   et/ou
- concentration d'une solution de LiFSI via un évaporateur à film mince.

Les exemples de ce document décrivent l'obtention de LiFSI avec des teneurs élevées en eau, par exemple comprises entre 58 et 323 ppm, et des teneurs variées en d'autres impuretés. De tels sels présentent notamment des inconvénients tels que des problèmes de corrosion, de sécurité...

Le document EP 2 977 349 concerne un procédé de préparation de sel de métal alcalin de disulfonylamine.

Le document EP 2 505 551 décrit un procédé de préparation de sel de bisfluorosulfonylimide.

Les exemples 3 à 6 du document WO 2015/158979 décrivent la préparation de LiFSI.

Il existe un besoin d'un nouveau procédé de séchage d'un sel de lithium de bis(fluorosulfonyl)imide permettant notamment d'obtenir ledit sel avec une teneur réduite en eau résiduelle.

Il existe également un besoin de disposer de nouvelles compositions de LiFSI ne présentant pas au moins l'un des inconvénients des sels LiFSI connus, et qui soient notamment compatibles avec des applications en électronique, telles que les batteries Li-ion.

### DESCRIPTION DE L'INVENTION

La présente invention concerne un procédé de séchage et purification d'un sel de lithium de bis(fluorosulfonyl)imide en solution dans un solvant organique S1, ledit procédé comprenant les étapes suivantes :
a) addition d'eau désionisée pour dissoudre et extraire le sel lithium de bis(fluorosulfonyl)imide, formant une solution aqueuse dudit sel ;
   a') éventuelle concentration de ladite solution aqueuse ;
b) extraction du sel de lithium de bis(fluorosulfonyl)imide à partir de ladite solution aqueuse, avec un solvant organique S2 formant un mélange azéotrope avec l'eau et rapport massique solvant organique S2/eau, lors d'une extraction, variant de 1/6 à 1/1, cette étape étant répétée au moins une fois;
c) concentration du sel de lithium de bis(fluorosulfonyl)imide par évaporation dudit solvant organique S2 et de l'eau, et
d) éventuelle cristallisation du sel de lithium de bis(fluorosulfonyl)imide.

Dans le cadre de l'invention, on utilise de manière équivalente les termes « sel de lithium de bis(fluorosulfonyl)imide », « lithium bis(sulfonyl)imidure », « LiFSI », « LiN(FSO₂)₂ », « lithium de bis(sulfonyl)imide », ou « bis(fluorosulfonyl)imidure de lithium ».

Dans le cadre de l'invention, le terme de « ppm » s'entend de ppm en poids.

Dans le cadre de l'invention, on entend par exemple par « sel ayant une teneur en eau inférieure ou égale à 40 ppm en poids », un sel ayant une teneur en eau inférieure ou égale à 40 ppm en poids par rapport au poids total dudit sel.

La solution initiale de sel de lithium de bis(fluorosulfonyl)imide peut provenir d'une synthèse quelconque du sel de lithium de bis(fluorosulfonyl)imide, comprenant en particulier les étapes suivantes :
i) synthèse du bis(chlorosulfonyl)imide ;
ii) fluoration du bis(chlorosulfonyl)imide en bis(fluorosulfonyl)imide ;
iii) préparation d'un sel alcalin ou alcalino-terreux du bis(fluorosulfonyl)imide par neutralisation du bis(fluorosulfonyl)imide ;
iv) échange de cation pour obtenir le sel de lithium du bis(fluorosulfonyl)imide.

A l'issue de ces étapes, on obtient de préférence le sel de lithium du bis(fluorosulfonyl)imide en solution dans un solvant organique (correspondant en particulier au solvant S1), à une concentration massique comprise entre 5% et 50% en masse par rapport à la masse totale de la solution.

Un tel procédé est par exemple décrit dans le document WO 2015/158979.

Selon un mode de réalisation, le solvant organique S1 susmentionné est choisi dans le groupe constitué des esters, des nitriles, des éthers, des solvants chlorés, des solvants aromatiques, et de leurs mélanges. De préférence, le solvant S1 est choisi parmi le dichlorométhane, l'acétate d'éthyle, l'acétate de butyle, le tétrahydrofurane, l'acétronitrile, le diéthyléther, et leurs mélanges. De préférence, le solvant organique S1 est l'acétate de butyle.

Selon l'invention, le solvant organique S1 et le solvant organique S2 peuvent être identiques ou différents.

De préférence, le solvant organique S1 et le solvant organique S2 sont identiques.

Selon un mode de réalisation, la teneur massique en LiFSI dans le solvant organique S1 est comprise entre 5% et 55%, de préférence entre 5% et 50%, préférentiellement entre 10% et 55%, avantageusement entre 10% et 50%, par exemple entre 10% et 40%, en particulier entre 15% et 40%, et préférentiellement entre 25% et 35% en masse, par rapport à la masse totale de la solution.

Selon un mode de réalisation, l'étape a), du procédé de purification et séchage selon l'invention, comprend l'addition d'eau désionisée à la solution de LiFSI dans le solvant organique S1 susmentionné, par exemple obtenue lors d'étapes de synthèse antérieures, pour permettre la dissolution dudit sel, et l'extraction dudit sel dans l'eau (phase aqueuse).

L'extraction peut être réalisée par tout moyen d'extraction connu. L'extraction permet typiquement la séparation d'une phase aqueuse (solution aqueuse dudit sel dans le cas présent) et d'une phase organique.

Selon l'invention, l'étape a) du procédé peut être répétée au moins une fois.

Le procédé de séchage et purification l'invention peut comprendre une ou plusieurs extractions avec l'eau désionisée, par exemple trois. Dans une première extraction, une quantité d'eau désionisée correspondant à la moitié de la masse de la solution initiale peut être ajoutée, puis une quantité égale à environ 1/3 de la masse de la solution initiale lors de la seconde extraction, puis une quantité égale à environ 1/4 de la masse de la solution initiale lors de la troisième extraction.

Selon un mode de réalisation préféré, l'étape a) est telle que la masse d'eau désionisée est supérieure ou égale à un tiers, de préférence supérieure ou égale à la moitié, de la masse de la solution initiale de LiFSI dans le solvant organique S1 (dans le cas d'une extraction unique, ou pour la première extraction uniquement si l'étape a) est répétée au moins une fois).

Le procédé selon l'invention peut comprendre l'ajout d'un volume d'eau désionisée dans l'étape a) supérieur ou égal à un tiers, de préférence supérieur ou égal à la moitié du volume de solvant S1 de la solution initiale.

En cas d'extractions multiples (répétition de l'étape a)), les phases aqueuses extraites sont rassemblées ensemble pour former une unique solution aqueuse.

L'étape a) permet avantageusement l'obtention d'une phase aqueuse et d'une phase organique, qui sont séparées. L'étape b) est ainsi avantageusement effectuée sur la solution aqueuse extraite à l'étape a) (phase aqueuse unique ou phases aqueuses rassemblées en cas de répétition de l'étape a)).

De préférence, dans le procédé selon l'invention, la (les) phase(s) organique(s) séparée(s) de la solution aqueuse extraite à l'étape a) (comprenant le solvant organique S1 et LiFSI) n'est (ne sont) pas réintroduite(s) dans les étapes ultérieures b) à d) du procédé, en particulier elle(s) n'est(ne sont) pas combinée(s) ultérieurement avec les phases organiques extraites lors de l'étape b) (comprenant le solvant organique S2).

A l'issue de l'étape a), on obtient en particulier une solution aqueuse de LiFSI.

Selon un mode de réalisation, la teneur massique en LiFSI dans la solution aqueuse est comprise entre 5% et 35%, de préférence entre 10% et 25%, par rapport à la masse totale de la solution.

Le procédé de séchage et purification selon l'invention peut comprendre une étape de concentration a') entre l'étape a) et l'étape b), de préférence pour obtenir une solution aqueuse de LiFSI comprenant une teneur massique en LiFSI comprise entre 20% et 80%, en particulier entre 25% et 75%, de préférence entre 25% et 70%, avantageusement entre 30% et 65% par rapport à la masse totale de la solution. L'étape de concentration peut être réalisée par un évaporateur rotatif sous pression réduite, à une pression inférieure à 50 mbar abs (de préférence inférieure à 30 mbar abs), et en particulier à une température comprise entre 25°C et 60°C, par exemple à 40°C.

De préférence, le procédé de séchage et purification selon l'invention comprend l'étape a'). Après concentration a') de la solution aqueuse obtenue à l'issue de l'étape a), on obtient une solution aqueuse de LiFSI concentrée.

Le LiFSI, contenu dans la solution aqueuse obtenue à l'issue de l'étape a), ou d'une éventuelle étape de concentration a') ou d'une éventuelle autre étape intermédiaire, peut alors être récupéré par extraction avec un solvant organique S2, ledit solvant S2 formant un azéotrope avec l'eau (étape b)). L'étape b) du procédé selon l'invention conduit en particulier, après extraction, à une phase organique, saturée en eau, contenant le LiFSI (il s'agit d'une solution de LiFSI dans le solvant organique S2, ladite solution étant saturée en eau).

L'extraction permet typiquement la séparation d'une phase aqueuse et d'une phase organique (solution de LiFSI dans le solvant S2 dans le cas présent).

L'étape b) permet avantageusement l'obtention d'une phase aqueuse et d'une phase organique, qui sont séparées.

Le solvant d'extraction S2 du sel LiFSI dissous dans l'eau désionisée est avantageusement :
- un bon solvant du sel de LiFSI, c'est-à-dire que le LiFSI peut avoir une solubilité supérieure ou égale à 10% poids par rapport au poids total de la somme LiFSI et solvant ; et/ou
- peu soluble dans l'eau, c'est-à-dire qu'il a une solubilité inférieure ou égale à 1% poids par rapport au poids total de la somme solvant et eau.

Selon un mode de réalisation, le solvant organique S2 est choisi dans le groupe constitué des esters, des nitriles, des éthers, des solvants chlorés, des solvants aromatiques, et de leurs mélanges. De préférence, le solvant S2 est choisi parmi les éthers, les esters, et leurs mélanges. Par exemple on peut citer le méthyl-t-butyl éther, le cyclopentylméthyl éther, l'acétate d'éthyle, l'acétate de propyle, l'acétate de butyle, le dichlorométhane, le tétrahydrofurane, l'acétronitrile, le diéthyléther, et leurs mélanges. De préférence, le solvant S2 est choisi parmi le méthyl-t-butyl éther, le cyclopentylméthyl éther, l'acétate d'éthyle, l'acétate de propyle, l'acétate de butyle, et leurs mélanges.

De préférence, le solvant organique S2 est l'acétate de butyle.

L'étape d'extraction b) est répétée au moins une fois, de préférence d'une à dix fois, et en particulier quatre fois. Les phases organiques peuvent alors être rassemblées en une seule avant l'étape c).

De préférence, dans le procédé selon l'invention, les phases organiques extraites lors de l'étape b) ne sont pas combinées avec la(les) phase(s) organique(s) obtenue(s) lors de l'étape a).

Pour chaque extraction, la quantité massique de solvant organique S2 utilisée peut varier entre 1/6 et 1 fois la masse de la phase aqueuse. De préférence, le rapport massique solvant organique S2/eau, lors d'une extraction de l'étape b), varie de 1/6 à 1/1, le nombre d'extractions variant en particulier de 2 à 10.

De préférence, lors de l'étape d'extraction b), le solvant organique S2 est ajouté à la solution aqueuse issue de l'étape a) (ou de l'éventuelle étape a').

Selon un mode de réalisation, la teneur massique en LiFSI en solution dans la phase organique est comprise entre 5% et 35%, de préférence entre 10% et 25% en masse par rapport à la masse totale de la solution.

Le procédé de séchage et purification selon l'invention peut comprendre une étape de concentration c') (pré-concentration) entre l'étape b) et l'étape c), de préférence pour obtenir une solution de LiFSI dans le solvant organique S2 comprenant une teneur massique en LiFSI comprise entre 20% et 60%, et de préférence entre 30% et 50% en masse par rapport à la masse totale de la solution.

L'étape de pré-concentration c') peut être réalisée à une température allant de 25°C à 60°C, de préférence de 25°C à 45°C, éventuellement sous pression réduite, par exemple à une pression inférieure à 50 mbar abs, en particulier à une pression inférieure à 30 mbar abs.

L'étape de pré-concentration c') peut être réalisée par un évaporateur rotatif sous pression réduite, notamment à 40°C et à une pression inférieure à 30 mbar abs.

Selon un mode de réalisation, l'étape c) du procédé selon l'invention consiste en la concentration de la solution de LiFSI dans le solvant organique S2 (obtenue notamment à l'issue de l'étape b) ou de l'éventuelle étape c')).

Selon un mode de réalisation, l'étape c) de concentration est réalisée sous pression réduite, de préférence à une pression comprise entre 200 mbar abs et 0,5 mbar abs, de façon à éviter avantageusement des températures élevées qui favorisent la décomposition du LiFSI, pendant par exemple une durée comprise entre 2 minutes et 48 heures, et de préférence entre 5 min et 24 heures, en particulier entre 10 min et 2 heures. La durée de l'étape c) est notamment comprise entre 45mn et 1 heure 15 minutes pour par exemple concentrer 1000 grammes de solution LiFSI dans le solvant S2. L'intervalle de température de l'étape de concentration peut être compris entre 30°C et 100°C, et de préférence entre 40°C et 90°C.

En particulier, le procédé de séchage et de purification selon l'invention est tel que lors de l'étape c), les phases organiques formées à l'issue de l'étape b) sont rassemblées et concentrées par évaporation à une température comprise entre 30°C et 100°C, de préférence entre 40°C et 90°C, et à une pression comprise entre 200 mbar abs et 0,5 mbar abs.

Tout appareillage de concentration par évaporation du solvant peut être employé, en particulier ceux permettant de diminuer la durée de l'étape de concentration afin de réduire avantageusement le risque de décomposition du sel de LiFSI. On peut par exemple citer un évaporateur rotatif, un évaporateur à couche mince (également dénommé « à film raclé ») ou tout autre appareillage permettant la concentration.

Parmi les évaporateurs à couche mince, on peut notamment citer les évaporateurs à couche mince commercialisés par les sociétés Buss SMS Ganzler ex Luwa AG, UIC Gmbh ou VTA Process.

Selon un mode de réalisation préféré, l'étape de concentration c) est réalisée sous pression réduite, notamment à une pression inférieure à 30 mbar abs, dans un évaporateur à couche mince, à une température particulière de 90°C, pendant une durée de 1 heure, notamment pour concentrer 150g de solution.

Le procédé de séchage et de purification selon l'invention permet avantageusement d'obtenir un sel de LiFSI ayant en particulier une teneur en eau inférieure ou égale à 45 ppm en poids, de préférence inférieure ou égale à 40 ppm en poids. Le procédé selon l'invention permet avantageusement l'obtention d'un sel de LiFSI compatible avec les applications dans les électrolytes pour batteries Li-ion.

Selon un mode de réalisation, l'azéotrope eau/solvant a généralement un point d'ébullition plus bas que le solvant S2 seul, ce qui permet avantageusement d'éviter ou réduire la décomposition possible du sel de LiFSI. L'azéotrope eau/solvant formé dans le procédé selon l'invention, permet avantageusement d'éliminer l'eau.

Selon l'invention, à l'issue de l'étape c) susmentionnée, le LiFSI peut être obtenu sous forme solide, et en particulier sous forme cristallisée, ou sous forme d'une solution concentrée, la solution concentrée comprenant moins de 10% en poids de solvant résiduel, de préférence moins de 5% en poids.

Selon un mode de réalisation, le procédé selon l'invention comprend en outre une étape d) de cristallisation du sel de lithium du bis(fluorosulfonyl)imide obtenu à l'issue de l'étape c) susmentionnée.

De préférence, lors de l'étape d), le LiFSI est cristallisé à froid, notamment à une température inférieure ou égale à 25°C.

De préférence, l'étape de cristallisation d) du LiFSI est réalisée dans un solvant organique S3 (« solvant de cristallisation ») choisi parmi les solvants chlorés, tel que par exemple le dichlorométhane, et les solvants aromatiques, tel que par exemple le toluène, en particulier à une température inférieure ou égale à 25°C. De préférence, le LiFSI cristallisé à l'issue de l'étape d) est récupéré par filtration.

Selon un mode de réalisation préféré, le procédé selon l'invention ne comprend pas d'étape de filtration, en particulier avec d'étape de filtration de molécules ayant une taille comprise entre 0,1 et 10 µm, entre l'étape a) et l'étape c) susmentionnée.

Le procédé selon l'invention peut comprendre des étapes intermédiaires entre les étapes du procédé susmentionnées. De préférence, le procédé ne comprend pas d'étapes intermédiaires entre les étapes susmentionnées.

Selon un mode de réalisation, le procédé de séchage et purification d'un sel de lithium du bis(fluorosulfonyl)imide en solution dans un solvant organique S1, selon l'invention, comprend les quatre étapes suivantes:
a) ajout d'eau désionisée à la solution de LiFSI dans un solvant organique S1, permettant l'extraction du sel de LiFSI dans l'eau, cette étape étant répétée de préférence au moins une fois ;
   a') éventuelle concentration de ladite solution aqueuse ;
b) extraction du sel de LiFSI à l'aide d'un solvant organique S2 formant un mélange azéotrope avec l'eau;
c) concentration du LiFSI par évaporation dudit solvant organique S2 entraînant notamment l'eau avec le solvant du fait de l'existence de l'azéotrope solvant S2/eau ; et
d) cristallisation du sel de bis(fluorosulfonyl)imide.

Selon un mode de réalisation, le procédé de séchage et purification selon l'invention comprend les étapes suivantes :
a) addition d'eau désionisée à la solution de LiFSI dans le solvant organique S1, notamment dans l'acétate de butyle, pour dissoudre et extraire le sel de lithium de bis(fluorosulfonyl)imide, formant une solution aqueuse dudit sel, cette étape étant répétée de préférence au moins une fois, la teneur massique en LiFSI dans le solvant organique S1 étant en particulier comprise entre 5% et 55% ;
   a') éventuelle concentration de la solution obtenue à l'issue de l'étape a), pour obtenir une solution aqueuse de LiFSI ayant une teneur en LiFSI comprise entre 20 et 80%, de préférence entre 30% et 65% ;
b) extraction du sel de lithium de bis(fluorosulfonyl)imide à partir de ladite solution aqueuse, avec un solvant organique S2 formant un mélange azéotrope avec l'eau, cette étape étant répétée au moins une fois;
   c') éventuelle étape de concentration de la solution organique obtenue à l'issue de l'étape b), pour obtenir une solution organique ayant une teneur massique en LiFSI comprise entre 20% et 60% ;
c) concentration du sel de lithium de bis(fluorosulfonyl)imide par évaporation dudit solvant organique S2 et de l'eau, à une température comprise entre 30°C et 100°C, de préférence entre 40°C et 90°C, et à une pression comprise entre 200 mbar abs et 0,5 mbar abs,;
d) éventuelle cristallisation du sel de lithium du bis(fluorosulfonyl)imide dans un solvant organique S3 choisi parmi les solvants chlorés, tel que par exemple le dichlorométhane, et les solvants aromatiques, tel que par exemple le toluène, à une température inférieure ou égale à 25°C,
   d') éventuelle filtration pour récupérer le LiFSI.

Selon un mode de réalisation, le procédé de séchage et purification selon l'invention comprend les étapes suivantes :
a) addition d'eau désionisée à la solution de LiFSI dans le solvant organique S1, notamment dans l'acétate de butyle, pour dissoudre et extraire le sel de lithium de bis(fluorosulfonyl)imide, formant une solution aqueuse dudit sel, cette étape étant de préférence répétée au moins une fois, la teneur massique en LiFSI dans le solvant organique S1 étant en particulier comprise entre 5% et 55% ;
   a') concentration de la solution obtenue à l'issue de l'étape a), pour obtenir une solution aqueuse de LiFSI ayant une teneur en LiFSI comprise entre 20 et 80%, de préférence entre 30% et 65%, notamment à 40°C et à une pression inférieure à 30 mbar abs ;
b) extraction du sel de lithium de bis(fluorosulfonyl)imide à partir de ladite solution aqueuse, avec un solvant organique S2 formant un mélange azéotrope avec l'eau, cette étape étant répétée au moins une fois;
c) concentration du sel de lithium de bis(fluorosulfonyl)imide par évaporation dudit solvant organique S2 et de l'eau, à une température comprise entre 30°C et 100°C, de préférence entre 40°C et 90°C, et à une pression comprise entre 200 mbar abs et 0,5 mbar abs;
d) cristallisation du sel de lithium du bis(fluorosulfonyl)imide dans un solvant organique S3 choisi parmi les solvants chlorés, tel que par exemple le dichlorométhane, et les solvants aromatiques, tel que par exemple le toluène, à une température inférieure ou égale à 25°C,
d') filtration pour récupérer le LiFSI.

Le procédé selon l'invention permet d'obtenir du LiFSI ayant avantageusement une teneur en eau inférieure ou égale à 45 ppm, en particulier inférieure ou égale à 40 ppm en masse par rapport à la masse totale dudit LiFSI.

De préférence, le procédé selon l'invention conduit à un LiFSI ayant une proportion massique en eau comprise par exemple entre 5 et 45 ppm, entre 8 et 45 ppm, entre 9 et 45 ppm, entre 10 et 45 ppm, entre 12 et 45 ppm, entre 15 et 45 ppm, entre 20 et 45 ppm, entre 25 et 45 ppm, entre 30 et 45 ppm, entre 5 et 40, entre 8 et 40 ppm, entre 9 et 40, entre 10 et 40 ppm, entre 12 et 40 ppm, entre 15 et 40 ppm, entre 20 et 40 ppm, entre 25 et 40 ppm, ou entre 30 et 40 ppm en masse par rapport à la masse totale dudit sel.

De préférence, le procédé selon l'invention conduit à un sel de LiFSI dont la proportion massique en ions sulfate est par exemple inférieure ou égale à 200 ppm, inférieure ou égale à 160 ppm, inférieure ou égale à 150 ppm, inférieure ou égale à 130 ppm, inférieure ou égale à 120 ppm, inférieure ou égale à 110 ppm, inférieure ou égale à 100 ppm, ou inférieure ou égale à 90 ppm en masse par rapport à la masse totale dudit sel.

De préférence, le procédé selon l'invention conduit à un sel de LiFSI dans lequel la proportion massique en ions sulfate est par exemple comprise entre 5 et 200 ppm, entre 5 et 160 ppm, entre 5 et 150 ppm, entre 5 et 140 ppm, entre 5 et 130 ppm, entre 5 et 120 ppm, entre 5 et 110 ppm, entre 5 et 100 ppm, entre 5 et 80 ppm, entre 8 et 200 ppm, entre 8 et 160 ppm, entre 8 et 150 ppm, entre 8 et 140 ppm, entre 8 et 130 ppm, entre 8 et 120 ppm, entre 8 et 110 ppm, entre 8 et 100 ppm, entre 8 et 80 ppm, entre 10 et 160 ppm, entre 10 et 150 ppm, entre 10 et 140 ppm, entre 10 et 130 ppm, entre 10 et 120 ppm, entre 10 et 110 ppm, entre 10 et 100 ppm, entre 10 et 80 ppm, entre 15 et 160 ppm, entre 15 et 150 ppm, entre 15 et 140 ppm, entre 15 et 130 ppm, entre 15 et 120 ppm, entre 15 et 110 ppm, entre 15 et 100 ppm, entre 15 et 80 ppm, entre 20 et 200 ppm, entre 20 et 160 ppm, entre 20 et 150 ppm, entre 20 et 140 ppm, entre 20 et 130 ppm, entre 20 et 120 ppm, entre 20 et 110 ppm, entre 20 et 100 ppm, entre 20 et 80 ppm, entre 25 et 160 ppm, entre 25 et 150 ppm, entre 25 et 140 ppm, entre 25 et 130 ppm, entre 25 et 120 ppm, entre 25 et 110 ppm, entre 25 et 100 ppm, ou entre 25 et 80 ppm en masse par rapport à la masse totale dudit sel.

Avantageusement, le procédé selon l'invention conduit à un sel de LiFSI dont la teneur massique en Cl⁻ est inférieure ou égale à 50 ppm, préférentiellement inférieure ou égale à 40 ppm en masse par rapport à la masse totale dudit sel.

Le procédé de l'invention permet avantageusement d'obtenir un LiFSI dont les teneurs massiques en d'autres impuretés sont les suivantes : F⁻ ≤200ppm (de préférence ≤50ppm), FSO₃Li ≤200ppm, FSO₂NH₂≤200ppm, CO₃^{2 -}≤50ppm, ClO₃⁻≤50ppm, ClO₄⁻ ≤50ppm, NO₂⁻≤50ppm, NO₃⁻≤50ppm, Si ≤40ppm, Mg ≤10ppm, Fe ≤10ppm, Ca ≤10ppm, Pb ≤10ppm, Cu ≤10ppm, Cr ≤10ppm, Ni ≤10ppm, Al ≤10ppm, Zn ≤10ppm, et Na ≤10ppm.

Selon un mode de réalisation, le procédé selon l'invention conduit avantageusement à un sel de LiFSI comprenant :
- une teneur massique en eau inférieure ou égale à 45 ppm, de préférence inférieure ou égale à 40 ppm, de préférence comprise entre 5 et 40 ppm, de préférence entre 8 et 40 ppm, en particulier entre 10 et 40 ppm, préférentiellement entre 12 et 40 ppm, par exemple entre 15 et 40 ppm, notamment entre 20 et 40 ppm, et avantageusement entre 25 et 40 ppm, et encore plus avantageusement entre 30 et 40 ppm ;
- une teneur massique en ions sulfate inférieure ou égale à 200 ppm, en particulier inférieure ou égale à 160 ppm, par exemple inférieure ou égale à 150 ppm, en particulier inférieure ou égale à 130 ppm, préférentiellement inférieure ou égale à 120 ppm, encore plus préférentiellement inférieure ou égale à 100 ppm;
- une teneur massique en Cl⁻ inférieure ou égale à 50 ppm;
- une teneur massique en F⁻ inférieure ou égale à 200 ppm, de préférence inférieure ou égale à 50 ppm ;
- une teneur massique en FSO₃Li inférieure ou égale à 200 ppm ;
- une teneur massique en FSO₂NH₂ inférieure ou égale à 200 ppm ;
- une teneur massique en CO₃²⁻ inférieure ou égale à 50 ppm ;
- une teneur massique en ClO₃⁻ inférieure ou égale à 50 ppm ;
- une teneur massique en ClO₄⁻ inférieure ou égale à 50 ppm ;
- une teneur massique en NO₂⁻ inférieure ou égale à 50 ppm ;
- une teneur massique en NO₃⁻ inférieure ou égale à 50 ppm ;
- une teneur massique en Si inférieure ou égale à 40 ppm ;
- une teneur massique en Mg inférieure ou égale à 10 ppm ;
- une teneur massique en Fe inférieure ou égale à 10 ppm ;
- une teneur massique en Ca inférieure ou égale à 10 ppm ;
- une teneur massique en Pb inférieure ou égale à 10 ppm ;
- une teneur massique en Cu inférieure ou égale à 10 ppm ;
- une teneur massique en Cr inférieure ou égale à 10 ppm ;
- une teneur massique en Ni inférieure ou égale à 10 ppm ;
- une teneur massique en Al inférieure ou égale à 10 ppm ;
- une teneur massique en Zn inférieure ou égale à 10 ppm ; et
- une teneur massique en Na inférieure ou égale à 10 ppm.

Le sel LiFSI obtenu selon le procédé de l'invention convient avantageusement à une utilisation dans les électrolytes de batteries Li-ion.

La présente invention concerne également un sel de LiFSI susceptible d'être obtenu selon le procédé de purification et de séchage tel que décrit précédemment, et leur utilisation dans les électrolytes de batteries Li-ion.

L'invention concerne également un procédé de fabrication d'un sel lithium de bis(fluorosulfonyl)imide qui comprend, en plus des étapes i) à iv) mentionnées plus haut, les étapes a) à d) du procédé de séchage et purification selon l'invention.

Selon un deuxième aspect, l'invention concerne un procédé de préparation d'un sel de lithium de bis(fluorosulfonyl)imide qui comprend, en amont des étapes a) à d) du procédé de séchage et purification susmentionné, les étapes i) à iv) suivantes:
i) synthèse du bis(chlorosulfonyl)imide ;
ii) fluoration du bis(chlorosulfonyl)imide en bis(fluorosulfonyl)imide ;
iii) préparation du sel alcalin ou alcalino-terreux de bis(fluorosulfonyl)imide par neutralisation du bis(fluorosulfonyl)imide ;
iv) échange de cation pour obtenir un sel de lithium de bis(fluorosulfonyl)imide.

Selon un mode de réalisation, le sel de lithium de bis(fluorosulfonyl)imide est préparé comme décrit ci-après.

Selon un mode de réalisation, la présente invention concerne un procédé de préparation d'un sel de lithium de bis(fluorosulfonyl)imide comprenant les étapes suivantes :
i) synthèse du bis(chlorosulfonyl)imide à partir de l'acide sulfamique;
ii) fluoration du bis(chlorosulfonyl)imide en bis(fluorosulfonyl)imide ;
iii) préparation du sel alcalin ou alcalino-terreux du bis(fluorosulfonyl)imide par neutralisation du bis(fluorosulfonyl)imide, en particulier à l'aide d'une solution aqueuse d'une base choisie parmi les carbonates de métaux alcalins ou alcalino-terreux, et les hydroxydes de métaux alcalins ou alcalino-terreux ;
iv) échange de cation pour obtenir un sel de lithium de bis(fluorosulfonyl)imide ;
v) procédé de séchage et purification selon l'invention susmentionné, comprenant les étapes a) à d) telles que décrites ci-dessus.

Le procédé de préparation du sel de lithium de bis(fluorosulfonyl)imide selon l'invention conduit avantageusement à un sel LiFSI ayant une teneur massique en eau inférieure ou égale à 45 ppm, de préférence inférieure ou égale à 40 ppm en masse par rapport à la masse totale dudit sel.

### Etape i) : Synthèse du bischlorosulfonylimide

Le composé (A) contenant deux groupements chlorosulfonyles (le bis(chlorosulfonyl)imide), peut être préparé à partir de l'acide sulfamique, en particulierselon le schéma suivant :

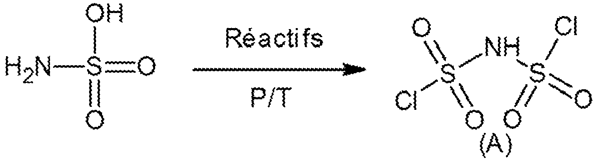

Selon un mode de réalisation, la température de la réaction est comprise entre 30°C et 150°C.

Selon un mode de réalisation, le temps de réaction est compris entre 1 heure et 7 jours.

Selon un mode de réalisation, la réaction peut être réalisée à une pression comprise entre 1 bar absolu et 7 bars absolus.

Selon un mode de réalisation, les « réactifs » peuvent être l'acide chlorosulfonique (ClSO₃H), et un agent chlorant choisi parmi le chlorure de thionyle (SOCl₂), le chlorure d'oxalyle (COCl)₂, le pentachlorure de phosphore (PCl₅), le trichlorure de phosphonyle (PCl₃), le trichlorure de phosphoryle (POCl₃) et leurs mélanges.

Selon l'invention, un catalyseur choisi parmi une amine tertiaire telle que la méthylamine, triéthylamine, la diéthylméthylamine ; la pyridine ; et la 2,6-lutidine, peut être ajouté pour accélérer la réaction.

Selon un mode de réalisation, le rapport molaire entre l'acide chlorosulfonique et l'acide sulfamique est compris entre 1 et 5.

Selon un mode de réalisation, le rapport molaire entre l'agent chlorant et l'acide sulfamique est compris entre 2 et 5.

Selon un autre mode de réalisation, les « réactifs » peuvent être l'acide sulfamique, et l'acide sulfurique ou l'oléum, et un agent chlorant choisi parmi le chlorure de thionyle (SOCl₂), le chlorure d'oxalyle (COCl)₂, le pentachlorure de phosphore (PCl₅), le trichlorure de phosphonyle (PCl₃), le trichlorure de phosphoryle (POCl₃) et leurs mélanges. Un catalyseur choisi parmi une amine tertiaire telle que la méthylamine, triéthylamine, la diéthylméthylamine, la pyridine et la 2,6-lutidine, peut être ajouté pour accélérer la réaction. Selon un mode de réalisation, le rapport molaire entre l'acide sulfurique (ou l'oléum) et l'acide sulfamique est compris entre 0,7 et 5. Selon un mode de réalisation, le rapport molaire entre l'agent chlorant et l'acide sulfamique est compris entre 3 et 10.

### Etape ii) : Fluoration du bis(chlorosulfonyl)imide en bis(fluorosulfonyl)imide

Le procédé de préparation du sel de LiFSI peut comprendre au moins une étape de réaction d'un composé de formule (A), notamment obtenu à l'issue de l'étape i) susmentionnée, avec de l'acide fluorhydrique anhydre, dans au moins un solvant organique.

L'étape ii) permet notamment la fluoration du composé (A) en un composé (B) tel que décrit ci-après.

L'étape de fluoration avec l'acide fluorhydrique anhydre, selon la présente invention, peut être schématisée comme suit :

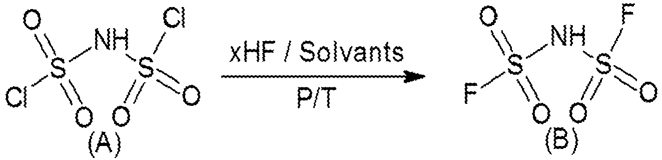

De préférence, le solvant utilisé dans l'étape ii) susmentionnée est un solvant organique, possédant en particulier un nombre donneur compris entre 1 et 70 avantageusement compris entre 5 et 65. L'indice donneur d'un solvant représente la valeur -ΔH, ΔH étant l'enthalpie de l'interaction entre le solvant et le pentachlorure d'antimoine (Journal of Solution Chemistry, vol. 13, No. 9, 1984). Comme solvant organique, on peut citer notamment les esters, les nitriles ou dinitriles, les éthers ou diéthers, les amines ou les phosphines. On peut également utiliser des combinaisons de ceux-ci à titre de solvant organique.

L'acétate de méthyle, l'acétate d'éthyle, l'acétate de butyle, l'acétonitrile, le propionitrile, l'isobutyronitrile, le glutaronitrile, le dioxane, le tétrahydrofurane, la triéthylamine, la tripropylamine, la diéthylisopropylamine, la pyridine, la triméthylphosphine, la triéthylphosphine, la diéthylisopropylphosphine, et leurs mélanges, peuvent convenir comme solvants.

De préférence, le solvant est un solvant organique soluble dans l'eau.

De préférence, le solvant organique est le dioxane.

L'étape de réaction avec de l'acide fluorhydrique anhydre peut être mise en oeuvre à une température T, de préférence comprise entre 0°C et la température d'ébullition du solvant ou du mélange de solvants utilisé. Avantageusement, cette température est comprise entre 5°C et la température d'ébullition du solvant ou du mélange de solvants.

L'étape de réaction avec de l'acide fluorhydrique anhydre peut être mise en oeuvre à une pression P, de préférence comprise entre 0 et 16 bars abs.

Cette étape est de préférence mise en oeuvre en dissolvant le composé de formule (A) dans le solvant, ou le mélange de solvants, préalablement à l'étape de réaction avec de l'HF anhydre.

Le rapport massique entre le composé de formule (A) et le solvant, ou le mélange de solvants, est de préférence compris entre 0,001 et 10, et avantageusement entre 0,005 et 5.

Selon un mode de réalisation, l'HF est introduit dans le milieu réactionnel, de préférence sous forme gazeuse.

Le rapport molaire x entre l'HF et le composé de formule (A) mis en jeu est de préférence compris entre 2 et 10, et avantageusement entre 2 et 5.

L'étape de réaction avec l'HF peut être effectuée en milieu fermé ou en milieu ouvert, de préférence l'étape iii) est réalisée en milieu ouvert avec dégagement d'HCl sous forme gaz.

L'utilisation d'un solvant donneur permet en particulier la formation d'un complexe solvant-HF, et ainsi d'exalter la nucléophilie de l'atome de fluor. L'utilisation d'un tel complexe permet avantageusement une fluoration douce du composé de formule (A) en évitant ainsi les réactions parasites de coupure.

### Etape iii) : Préparation du sel de bis(fluorosulfonyl)imide par neutralisation du bis(fluorosulfonyl)imide

Selon un mode de réalisation, le procédé de préparation du sel de lithium de bis(fluorosulfonyle)imide comprend, à l'issue de l'étape ii) de fluoration, une étape de neutralisation (étape iii).

Selon un mode de réalisation, l'étape de neutralisation est réalisée à l'aide d'une solution aqueuse d'une base choisie parmi les carbonate de métaux alcalins ou alcalino-terreux de formule MCO₃,nH₂O ou les hydroxyde de métaux alcalins ou alcalino-terreux MOH,nH₂O, avec M représentant un cation monovalent de métal alcalin ou alcalino-terreux. De préférence, MOH représente NaOH, KOH RbOH, et CsOH. De préférence, MCO₃ représente Na₂CO₃, K₂CO₃, Rb₂CO₃, Cs₂CO₃.

De préférence, M ne représente pas Li.

De préférence, la base utilisée n'est pas une base comprenant du lithium. De préférence, la base utilisée comprend du potassium.

L'étape iii) susmentionnée est notamment réalisée selon le schéma suivant:

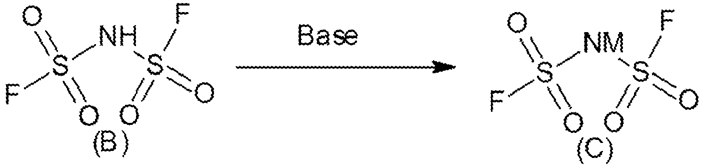

De préférence, l'étape de neutralisation conduit à une solution de (C) ayant un pH supérieur à 4.

En particulier, l'HF résiduel et/ou l'HCl résiduel dissous dans le solvant réagit avec la base décrite ci-dessus, de sorte à former un fluorure de métal alcalin ou alcalino-terreux MF (ou un mélange de fluorures MF), respectivement un chlorure de métal alcalin ou alcalino-terreux MCl (ou un mélange de chlorures MCl). La réaction de neutralisation peut être mise en oeuvre par exemple par ajout d'une solution aqueuse de la base choisie. Le rapport molaire base/composé (B) peut être par exemple de 1 à 5 lorsque la base est un hydroxyde, ou de 0,5 à 5 (ou de 2 à 10), lorsque la base est un carbonate. La température de la réaction peut par exemple être comprise entre -10°C et 40°C.

Selon l'invention, la solution aqueuse comprenant le composé (C) peut ensuite être filtrée.

Selon la nature du métal alcalin ou alcalino-terreux, le produit (C) peut être présent dans le filtrat ou dans le solide filtré. Les fluorures de métaux alcalins ou alcalino-terreux sont notamment présents dans le solide filtré mais peuvent également se retrouver dans le filtrat.

Deux étapes différentes de récupération du produit (C) peuvent être utilisées à l'issue de l'étape iii), selon où se situe majoritairement le produit (C) : étape R1 ou étape R2.

Selon un premier de mode de récupération (étape R1), lorsque le produit (C) est majoritairement contenu dans la phase aqueuse (filtrat), la phase aqueuse peut être extraite avec un solvant organique choisi parmi les familles suivantes: les esters, les nitriles, les éthers, les solvants chlorés, les solvants aromatiques, et leurs mélanges. De préférence, le solvant organique est choisi parmi le dichlorométhane, l'acétate d'éthyle, l'acétate de butyle, le tétrahydrofurane, l'acétronitrile, le diéthyléther, et leurs mélanges. En particulier, il s'agit de l'acétate de butyle.

Pour chaque extraction, la quantité massique de solvant organique utilisée peut varier entre 1/6 et 1 fois la masse de la phase aqueuse. Le nombre d'extractions peut être compris entre 2 et 10. De préférence, la phase organique, résultant de l'extraction, présente une teneur massique en sel de bis(fluorosulfonyl)imide allant de 5 à 50% en masse. La phase organique peut ensuite être concentrée pour atteindre une concentration en sel de bis(fluorosulfonyl)imide comprise entre 5 et 55%, de préférence entre 10% et 50% en masse, ladite concentration pouvant être réalisée par tout moyen d'évaporation connu de l'homme du métier.

Selon un deuxième mode de récupération (étape R2), lorsqu'il est principalement contenu dans le gâteau (solide filtré), le produit (C) peut être récupéré par lavage du gâteau avec un solvant organique choisi parmi les familles suivantes : les esters, les nitriles, les éthers, les solvants chlorés, les solvants aromatiques, et leurs mélanges. De préférence, le solvant organique est choisi parmi le dichlorométhane, l'acétate d'éthyle, l'acétate de butyle, le tétrahydrofurane, l'acétronitrile, le diéthyléther, et leurs mélanges. En particulier, il s'agit de l'acétate de butyle.

La quantité massique de solvant organique utilisée peut varier entre 1 et 10 fois le poids du gâteau. La quantité totale de solvant organique destinée au lavage peut être utilisée en une seule fois ou en plusieurs fois dans le but notamment d'optimiser la dissolution du produit (C). De préférence, la phase organique, résultant de l'extraction, présente une teneur massique en sel LiFSI allant de 5 à 50% en masse. La phase organique peut ensuite être concentrée pour atteindre une concentration en sel de bis(fluorosulfonyl)imide comprise entre 5 et 55%, de préférence entre 10% et 50% en masse, ladite concentration pouvant être réalisée par tout moyen d'évaporation connu de l'homme du métier.

De préférence, le composé (C) est tel que M = K.

### Etape iv : échange de cation pour obtenir un sel de lithium de bis(fluorosulfonyl)imide

Une dernière étape d'échange de cations peut être réalisée, par exemple selon le schéma suivant : 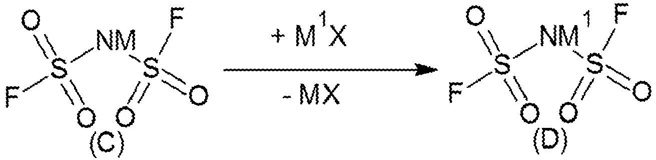 où M¹ = Li et X peut être un fluorure, un chlorure, un carbonate, un hydroxyde, un sulfate, un chlorate, un perchlorate, un nitrite ou un nitrate.

Le sel M¹X peut être dissous dans un solvant organique polaire choisi parmi les familles suivantes : les alcools, les nitriles et les carbonates. A titre d'exemple on peut notamment citer le méthanol, l'éthanol, l'acétonitrile, le diméthylcarbonate et l'éthylméthylcarbonate. Cette solution peut être versée dans une solution du produit (C) dans un solvant organique choisi parmi les familles suivantes : les esters, les nitriles, les éthers, les solvants chlorés, les solvants aromatiques, et leurs mélanges. De préférence, le solvant est choisi parmi le dichlorométhane, l'acétate d'éthyle, l'acétate de butyle, le tétrahydrofurane, l'acétronitrile, le diéthyléther, et leurs mélanges. De préférence, le solvant est l'acétate de butyle.

Le rapport molaire du produit (C) par rapport à M¹X peut varier : il peut être au moins égal à 1 et inférieur à 5. De préférence le rapport molaire (C)/M¹X est compris entre 1,2 et 2.

Le milieu réactionnel peut être laissé sous agitation entre 1 à 24 heures à une température comprise par exemple entre 0 et 50°C. A la fin de la réaction, le milieu réactionnel peut être filtré pour éliminer le précipité MX formé. Le filtrat peut ensuite être concentré pour éliminer le solvant du sel M¹X avec une température d'ébullition inférieure ou égale à 90°C. Un précipité de MX peut alors se former à nouveau et être éliminé par filtration. Grâce à cette purification le taux relatif massique de l'impureté M par rapport au produit (D) est avantageusement inférieur ou égale à 500 ppm.

Selon un premier mode de réalisation, la solution du produit (D) obtenue après la(les) filtration(s) est évaporée, soit par un évaporateur à couche mince, soit par un atomiseur, soit par un évaporateur rotatif, ou soit par tout autre appareil permettant l'évaporation de solvant.

Le composé (D) peut ensuite être soumis au procédé de purification et séchage selon l'invention décrit ci-dessus, comprenant notamment les étapes suivantes :
a) addition d'eau désionisée pour former une solution aqueuse de composé (D) (sel de lithium de bis(fluorosulfonyl)imide) ;
   a') éventuelle concentration de ladite solution aqueuse ;
b) extraction du sel de lithium de bis(fluorosulfonyl)imide à partir de ladite solution aqueuse, à l'aide d'un solvant organique S2 formant un mélange azéotrope avec l'eau, cette étape étant répétée au moins une fois;
c) concentration du sel de lithium de bis(fluorosulfonyl)imide par évaporation dudit solvant organique S2 et de l'eau, et
d) éventuelle cristallisation du sel de lithium de bis(fluorosulfonyl)imide.

Le produit (D) purifié selon le procédé de l'invention, se présente avantageusement sous la forme d'une poudre blanche.

La présente invention concerne également un sel de lithium de bis(fluorosulfonyl)imide comprenant une teneur massique en eau comprise entre 5 et 45 ppm, de préférence entre 5 et 40 ppm en masse par rapport à la masse totale dudit sel.

La présente invention concerne également une composition C comprenant :
- au moins 99,80%, de préférence au moins 99,85%, avantageusement au moins 99,90%, et préférentiellement au moins 99,95% en poids de sel de lithium de bis(fluorosulfonyl)imide (LiFSI) par rapport au poids total de la composition; et
- entre 5 ppm et 45 ppm, de préférence entre 5 et 40 ppm en masse d'eau par rapport à la masse totale de la composition C.

Dans le sel LiFSI selon l'invention (ou dans la composition C selon l'invention), la proportion massique en eau peut être comprise par exemple entre 8 et 45 ppm, entre 9 et 45 ppm, entre 10 et 45 ppm, entre 11 et 45 ppm, entre 12 et 45 ppm, entre 13 et 45 ppm, entre 14 et 45 ppm, entre 15 et 45 ppm, entre 16 et 45 ppm, entre 17 et 45 ppm, entre 18 et 45 ppm, entre 19 et 45 ppm, entre 20 et 45 ppm, entre 21 et 45 ppm, entre 22 et 45 ppm, entre 23 et 45 ppm, entre 24 et 45 ppm, entre 25 et 45 ppm, entre 26 et 45 ppm, entre 27 et 45 ppm, entre 28 et 45 ppm, entre 29 et 45 ppm, entre 30 et 45 ppm, 8 et 40 ppm, entre 9 et 40 ppm, entre 10 et 40 ppm, entre 11 et 40 ppm, entre 12 et 40 ppm, entre 13 et 40 ppm, entre 14 et 40 ppm, entre 15 et 40 ppm, entre 16 et 40 ppm, entre 17 et 40 ppm, entre 18 et 40 ppm, entre 19 et 40 ppm, entre 20 et 40 ppm, entre 21 et 40 ppm, entre 22 et 40 ppm, entre 23 et 40 ppm, entre 24 et 40 ppm, entre 25 et 40 ppm, entre 26 et 40 ppm, entre 27 et 40 ppm, entre 28 et 40 ppm, entre 29 et 40 ppm, ou entre 30 et 40 ppm en masse par rapport à la masse totale dudit sel (respectivement par rapport à la masse totale de la composition C).

Dans le sel LiFSI selon l'invention (ou dans la composition C selon l'invention), la proportion massique en ions sulfate peut par exemple être inférieure ou égale à 200 ppm, inférieure ou égale à 160 ppm, inférieure ou égale à 150 ppm, inférieure ou égale à 130 ppm, inférieure ou égale à 120 ppm, inférieure ou égale à 110 ppm, inférieure ou égale à 100 ppm, ou inférieure ou égale à 90 ppm en masse par rapport à la masse totale dudit sel (respectivement par rapport à la masse totale de la composition C).

Dans le sel LiFSI selon l'invention (ou dans la composition C selon l'invention), la proportion massique en ions sulfate peut par exemple être comprise entre 5 et 200 ppm, entre 5 et 160 ppm, entre 5 et 150 ppm, entre 5 et 140 ppm, entre 5 et 130 ppm, entre 5 et 120 ppm, entre 5 et 110 ppm, entre 5 et 100 ppm, entre 5 et 80 ppm, entre 8 et 200 ppm, entre 8 et 160 ppm, entre 8 et 150 ppm, entre 8 et 140 ppm, entre 8 et 130 ppm, entre 8 et 120 ppm, entre 8 et 110 ppm, entre 8 et 100 ppm, entre 8 et 80 ppm, entre 10 et 160 ppm, entre 10 et 150 ppm, entre 10 et 140 ppm, entre 10 et 130 ppm, entre 10 et 120 ppm, entre 10 et 110 ppm, entre 10 et 100 ppm, entre 10 et 80 ppm, entre 15 et 160 ppm, entre 15 et 150 ppm, entre 15 et 140 ppm, entre 15 et 130 ppm, entre 15 et 120 ppm, entre 15 et 110 ppm, entre 15 et 100 ppm, entre 15 et 80 ppm, entre 20 et 200 ppm, entre 20 et 160 ppm, entre 20 et 150 ppm, entre 20 et 140 ppm, entre 20 et 130 ppm, entre 20 et 120 ppm, entre 20 et 110 ppm, entre 20 et 100 ppm, entre 20 et 80 ppm, entre 25 et 160 ppm, entre 25 et 150 ppm, entre 25 et 140 ppm, entre 25 et 130 ppm, entre 25 et 120 ppm, entre 25 et 110 ppm, entre 25 et 100 ppm, ou entre 25 et 80 ppm en masse par rapport à la masse totale dudit sel (respectivement par rapport à la masse totale de la composition C).

Selon un mode de réalisation, le sel LiFSI (ou la composition C selon l'invention) a une teneur en ions Cl⁻ inférieure ou égale à 50 ppm en poids par rapport au poids total dudit sel (respectivement par rapport au poids total de la composition C).

En particulier, le sel LiFSI selon l'invention (ou la composition C selon l'invention), comprend les impuretés suivantes :
F⁻≤200 ppm (de préférence ≤ 50 ppm), FSO₃Li ≤ 200 ppm, FSO₂NH₂≤ 200 ppm, CO₃^{2 -}≤ 50 ppm, ClO₃⁻ ≤ 50 ppm, ClO₄⁻ ≤ 50 ppm, NO₂⁻ ≤ 50 ppm, NO₃⁻ ≤ 50 ppm, Si ≤ 40 ppm, Mg ≤ 10 ppm, Fe ≤ 10 ppm, Ca ≤10ppm, Pb ≤10ppm, Cu ≤ 10 ppm, Cr ≤ 10 ppm, Ni ≤ 10 ppm, Al ≤ 10 ppm, Zn ≤ 10 ppm, et Na ≤ 10 ppm.

Selon un mode de réalisation préféré, le LiFSI selon l'invention (ou la composition C selon l'invention), comprend :
- une teneur massique en eau comprise entre 5 et 45 ppm, et en particulier comprise par exemple entre 8 et 45 ppm, entre 9 et 45 ppm, entre 10 et 45 ppm, entre 11 et 45 ppm, entre 12 et 45 ppm, entre 13 et 45 ppm, entre 14 et 45 ppm, entre 15 et 45 ppm, entre 16 et 45 ppm, entre 17 et 45 ppm, entre 18 et 45 ppm, entre 19 et 45 ppm, entre 20 et 45 ppm, entre 21 et 45 ppm, entre 22 et 45 ppm, entre 23 et 45 ppm, entre 24 et 45 ppm, entre 25 et 45 ppm, entre 26 et 45 ppm, entre 27 et 45 ppm, entre 28 et 45 ppm, entre 29 et 45 ppm, entre 30 et 45 ppm, ou entre 30 et 40 ppm en masse par rapport à la masse totale dudit sel (respectivement par rapport à la masse totale de la composition C);
- une teneur massique en ions sulfate inférieure ou égale à 200 ppm, par exemple comprise entre 5 et 200 ppm, entre 5 et 160 ppm, entre 5 et 150 ppm, entre 5 et 140 ppm, entre 5 et 130 ppm, entre 5 et 120 ppm, entre 5 et 110 ppm, entre 5 et 100 ppm, entre 5 et 80 ppm, entre 8 et 200 ppm, entre 8 et 160 ppm, entre 8 et 150 ppm, entre 8 et 140 ppm, entre 8 et 130 ppm, entre 8 et 120 ppm, entre 8 et 110 ppm, entre 8 et 100 ppm, entre 8 et 80 ppm, entre 10 et 160 ppm, entre 10 et 150 ppm, entre 10 et 140 ppm, entre 10 et 130 ppm, entre 10 et 120 ppm, entre 10 et 110 ppm, entre 10 et 100 ppm, entre 10 et 80 ppm, entre 15 et 160 ppm, entre 15 et 150 ppm, entre 15 et 140 ppm, entre 15 et 130 ppm, entre 15 et 120 ppm, entre 15 et 110 ppm, entre 15 et 100 ppm, entre 15 et 80 ppm, entre 20 et 200 ppm, entre 20 et 160 ppm, entre 20 et 150 ppm, entre 20 et 140 ppm, entre 20 et 130 ppm, entre 20 et 120 ppm, entre 20 et 110 ppm, entre 20 et 100 ppm, entre 20 et 80 ppm, entre 25 et 160 ppm, entre 25 et 150 ppm, entre 25 et 140 ppm, entre 25 et 130 ppm, entre 25 et 120 ppm, entre 25 et 110 ppm, entre 25 et 100 ppm, ou entre 25 et 80 ppm en masse par rapport à la masse totale dudit sel (respectivement par rapport à la masse totale de la composition C); et
- une teneur massique en Cl⁻ inférieure ou égale à 50 ppm en poids ;
- une teneur massique en F⁻ inférieure ou égale à 200 ppm, de préférence inférieure ou égale à 50 ppm ;
- une teneur massique en FSO₃Li inférieure ou égale à 200 ppm ;
- une teneur massique en FSO₂NH₂ inférieure ou égale à 200 ppm ;
- une teneur massique en CO₃²⁻ inférieure ou égale à 50 ppm ;
- une teneur massique en ClO₃⁻ inférieure ou égale à 50 ppm ;
- une teneur massique en ClO₄⁻ inférieure ou égale à 50 ppm ;
- une teneur massique en NO₂⁻ inférieure ou égale à 50 ppm ;
- une teneur massique en NO₃⁻ inférieure ou égale à 50 ppm ;
- une teneur massique en Si inférieure ou égale à 40 ppm ;
- une teneur massique en Mg inférieure ou égale à 10 ppm ;
- une teneur massique en Fe inférieure ou égale à 10 ppm ;
- une teneur massique en Ca inférieure ou égale à 10 ppm ;
- une teneur massique en Pb inférieure ou égale à 10 ppm ;
- une teneur massique en Cu inférieure ou égale à 10 ppm ;
- une teneur massique en Cr inférieure ou égale à 10 ppm ;
- une teneur massique en Ni inférieure ou égale à 10 ppm ;
- une teneur massique en Al inférieure ou égale à 10 ppm ;
- une teneur massique en Zn inférieure ou égale à 10 ppm ; et
- une teneur massique en Na inférieure ou égale à 10 ppm.

La présente invention concerne également l'utilisation du sel de LiFSI selon l'invention (ou la composition C selon l'invention) dans des batteries Li-ion, notamment dans des électrolytes de batteries Li-ion.

En particulier le sel LiFSI selon l'invention (ou la composition C selon l'invention) peut être utilisé dans des batteries Li-ion d'appareils nomades (par exemple les téléphones portables, les appareils photos, les tablettes ou les ordinateurs portables), ou de véhicules électriques, ou de stockage d'énergie renouvelable (tel que le photovoltaïque ou l'éolien).

Le sel LiFSI (ou la composition C selon l'invention) peut notamment être utilisé dans des batteries de type « poche » (connu également sous le terme « Pouch Cell »).

Le sel LiFSI (ou la composition C selon l'invention) peut avantageusement être utilisé pour des applications à haute ou à basse température.

Le sel LiFSI selon l'invention (ou la composition C selon l'invention) présente avantageusement au moins l'un des avantages suivants :
- diminution des risques de court-circuit, d'inflammation ou d'explosion de la batterie ;
- durée de vie plus longue ;
- augmentation du nombre de cycles de charge ;
- diminution voire suppression de la corrosion des constituants de la batterie, tel que le collecteur d'Al ;
- diminution des risques de gonflement de la batterie, notamment de batteries souples de type « poche » (connu sous le terme « Pouch cell ») ;
- bonne tenue à haute et/ou à basse température.

Dans le cadre de l'invention, par « compris entre x et y », ou « allant de x à y », on entend un intervalle dans lequel les bornes x et y sont incluses. Par exemple, la température «comprise entre 30 et 100°C » inclus notamment les valeurs 30°C et 100°C.

Tous les modes de réalisation décrits ci-dessus peuvent être combinés les uns avec les autres. En particulier, chaque mode de réalisation d'une étape quelconque du procédé de l'invention peut être combiné avec un autre mode de réalisation particulier.

La présente invention est illustrée par l'exemple suivant, auquel elle n'est cependant pas limitée.

### Exemple 1 Purification et analyse des taux d'impuretés dans le sel de lithium du bis(fluorosulfonyl)imide préparé par le procédé selon l'invention

Différentes impuretés présentes dans le sel de lithium du bis(fluorosulfonyl)imide ont été analysées et les résultats obtenus sont présentés ci-dessous.

### Purification d'une solution de LiFSI dans l'acétate de butyle.

Soit une solution contenant 166g de LiFSI (qui peut par exemple être obtenu selon le procédé décrit dans WO2015158979) dans 830 g d'acétate de butyle. Elle est concentrée dans un évaporateur rotatif chauffé à 40°C sous vide (pression<30mbar abs). On obtient une solution dont l'extrait sec est de 34% en masse. On réalise l'extraction aqueuse du LiFSI contenu, en 3 fois (ajout de 1/2 masse d'eau par rapport à la masse de la solution concentrée (extrait sec de 34% en masse), puis 1/3 masse d'eau par rapport à la masse de la solution concentrée (extrait sec de 34% en masse), puis 1/4 de masse d'eau par rapport à la masse de la solution concentrée (extrait sec de 34% en masse)). On réunit les phases aqueuses (l'extrait sec est de 18% en masse) que l'on concentre par évaporation sous vide (P<30mbar abs) à 40°C, pour obtenir une solution dont l'extrait sec est de 32% en masse. Le rendement de récupération en LiFSI est de 73%. Le LiFSI dissous dans l'eau est alors ré-extrait par 4 extractions successives dans l'acétate de butyle par 1/4 de la masse de la solution aqueuse. On obtient une solution de LiFSI dans l'acétate de butyle (l'extrait sec étant de 12% environ). Le rendement d'extraction est de 62% en LiFSI.

### Séchage du LiFSI

On réunit les extractions en phase solvant que l'on concentre d'abord par un évaporateur rotatif à 40°C sous pression réduite (P<30mbar abs). On obtient une solution dont l'extrait sec est de 42%. La dernière concentration est réalisée sur un évaporateur à film mince (de type Luwa) à 90°C de surface interne de 0,04 m² et sous une pression de 5 mbar abs pendant une durée de 1 heure 11 minutes. On obtient 72g LiFSI qui cristallise à froid, que l'on récupère par filtration, dont l'analyse est donnée ci-dessous.

### Echantillonnage pour la quantification de Li, Na et traces d'éléments de la liste fournie:

L'échantillon du sel de lithium du bis(fluorosulfonyl)imide obtenu selon le procédé décrit ci-dessus est dissous dans de l'eau ultra-pure. Deux dilutions ont été utilisées : 1g/l pour la détermination du Na, et éléments Ag, Al, As, Ba, Si, Cd, Co, Cr, Cu, Ni, Pb, Sb, Se, Sn, Sr, Ti, Zn à l'état de trace, et 0,1g/l pour l'analyse du Lithium.

### Analyse qualitative panoramique :

Les conditions ICP-AES (spectrométrie à plasma à couplage inductif) appliquées pour l'analyse semi-quantitative dite panoramique des éléments à l'état de trace sont:
Puissance de sortie de la source Plasma : 1150 W
Débit du gaz de nébulisation : 0,7 L/min
Débit de refroidissement = 16 L/min
Hauteur de torche : 12 mm
Vitesse de pompe : 50 trm
Bande passante spectrale : 7 pm à 200 nm, 3.5 nm par pixel
Plage de longueurs d'onde : 167 nm à 847 nm.
La méthode ICP-AES de quantification pour mesurer Li, Na a utilisé 5 points de calibration. Les données ICP-AES sont obtenues sur un spectromètre ICAP 6500 (Thermo Electronics).
Pour l'analyse des éléments à l'état de trace Ag, Al, As, Ba, Si, Cd, Co, Cr, Cu, Ni, Pb, Sb, Se, Sn, Sr, Ti, Zn, la méthode semi-quantitative repose sur deux points de calibration.

Pour les deux méthodes, l'étalonnage est réalisé par addition d'étalons dans l'échantillon lui-même de manière à minimiser les effets de matrice.

L'ICP-AES est préférée à la chromatographie cationique en solution aqueuse pour la mesure des éléments Li, Na.

Les conditions d'**analyse des anions en chromatographie ionique (Cl)** sont les suivantes :
- Appareil Thermo ICS 5000 DUAL ;
- Colonne AS16-HC ;
- Débit 1 ml/min ;
- Eluant KOH isocratique à 20 mmole/l ;
- Détection conductimétrique ;
- Suppresseur ASRS 4 mm avec 50 mA de courant imposé ;
- Injection de 25 µl de solutions de LiFSI à 5g/l et 10g/l selon la sensibilité requise par espèce anionique présente ;
- Etalonnage de chaque espèce anionique avec cinq solutions synthétiques allant de 0,1 mg/l jusqu'à 25 mg/l.

Les conditions d'**analyse RMN** des espèces fluorées telles que FSO₃Li et FSO₂NH₂ en RMN ¹⁹F, H1, sont les suivantes :
- Equipement : Les spectres et quantifications RMN ont été effectués sur un spectromètre Bruker AV 400, à t 376,47 MHz pour ¹⁹F, sur une sonde de 5 mm de type BBFO⁺.
- Echantillonnage : Les échantillons sont dissous dans DMSO-d6 (environ 30 mg dans 0,6 ml). Dans le cas de la détection de fluorures ou d'ajout de LiF servant à vérifier la présence indésirable de fluorures, le solvant utilisé est D₂O en raison de l'insolubilité de LiF dans le DMSO.
- Quantification : La quantification relative en RMN du fluor 19 (RMN ¹⁹F) est faite par intégration des signaux des espèces fluorées, pondérés du nombre de fluor contribuant au signal, méthode bien connue de l'homme de l'art.
   La quantification absolue en RMN ¹⁹F est faite par ajout dosé d'α,α,α-trifluorotoluène (TFT), Aldrich dans le tube contenant l'échantillon, et par intégration des signaux des espèces fluorées à doser en comparaison de celle des CF₃ de cet étalon interne, selon méthode bien connue de l'homme de l'art. La limite de quantification d'une espèce est de l'ordre d'une cinquantaine de ppm.
- Teneur en eau : Réalisé par dosage du type Karl Fischer 684 KF coulometer couplé au 860 KF Thermoprep (matériel Metrohm).

L'échantillon solide de LiFSI est transféré en boîte à gants dans un flacon adapté au Thermoprep. Il est chauffé durant 30 minutes à 50°C puis la phase gaz est introduite dans la cellule de dosage du titrimètre KF.

**Les résultats obtenus sont présentés dans le tableau I.**

| Espèce | Quantité | Méthode d'analyse |
|---|---|---|
| FSO₂NH₂ | ND | RMN ¹⁹F |
| FSO₃Li | ND | RMN ¹⁹F |
| H₂O | 34ppm | Karl Fischer |
| SO₄²⁻ | 80ppm | Cl |
| Cl⁻ | 35ppm | Cl |
| F- | <50ppm | RMN |
| CO₃²⁻ | ND | Cl |
| ClO₃⁻ | ND | Cl |
| ClO₄⁻ | ND | Cl |
| NO₂⁻ | ND | Cl |
| NO₃⁻ | ND | Cl |
| Mg | ND | ICP |
| Si | ND | FX |
| Fe | ND | ICP |
| Ca | ND | ICP |
| Pb | ND | ICP |
| Cu | ND | ICP |
| Cr | ND | ICP |
| Ni | ND | ICP |
| Al | ND | ICP |
| Zn | ND | ICP |
| Na | ND | ICP |

| | | |
|---|---|---|
| *ND : non détecté* | | |

### Tableau I

Le procédé de purification et séchage selon l'invention permet avantageusement l'obtention d'un sel LiFSI ayant une faible teneur en eau résiduelle, à savoir inférieure ou égale à 40 ppm, et une teneur faible en impuretés. Par exemple, la teneur en sulfate est inférieure à 100 ppm, elle est notamment de 80 ppm.

## Revendications

1. Procédé de séchage et purification d'un sel de lithium de bis(fluorosulfonyl)imide en solution dans un solvant organique S1, ledit procédé comprenant les étapes suivantes :
a) addition d'eau désionisée pour dissoudre et extraire le sel de lithium de bis(fluorosulfonyl)imide, formant une solution aqueuse dudit sel, cette étape étant de préférence répétée au moins une fois ;
a') éventuelle concentration de ladite solution aqueuse ;
b) extraction du sel de lithium de bis(fluorosulfonyl)imide à partir de ladite solution aqueuse, avec un solvant organique S2 formant un mélange azéotrope avec l'eau et rapport massique solvant organique S2/eau, lors d'une extraction, variant de 1/6 à 1/1, cette étape étant répétée au moins une fois;
c) concentration du sel de lithium de bis(fluorosulfonyl)imide, par évaporation dudit solvant organique S2 et de l'eau, et
d) éventuellement cristallisation du sel de lithium de bis(fluorosulfonyl)imide.

2. Procédé selon la revendication 1, comprenant l'étape a') de concentration de ladite solution aqueuse, de préférence pour obtenir une solution aqueuse comprenant une teneur en sel de lithium de bis(fluorosulfonyl)imide comprise entre 20% et 80%, préférentiellement entre 30% et 65%.

3. Procédé selon l'une quelconque des revendications 1 ou 2, dans lequel l'étape a) est telle que la masse d'eau désionisée est supérieure ou égale à un tiers, de préférence supérieure ou égale à la moitié, de la masse de la solution initiale du sel de lithium de bis(fluorosulfonyl)imide dans le solvant organique S1.

4. Procédé selon l'une quelconque des revendications 1 à 3, dans lequel le solvant organique S2 est choisi dans le groupe constitué des esters, des nitriles, des éthers, des solvants chlorés, des solvants aromatiques, et de leurs mélanges, le solvant organique S2 étant en particulier choisi dans le groupe constitué du méthyl-t-butyl éther, du cyclopentylméthyl éther, de l'acétate d'éthyle, de l'acétate de propyle, de l'acétate de butyle, et de leurs mélanges, ledit solvant organique S2 étant préférentiellement l'acétate de butyle.

5. Procédé selon l'une quelconque des revendications 1 à 4, dans lequel le solvant organique S1 est choisi dans le groupe constitué des esters, des nitriles, des éthers, des solvants chlorés, des solvants aromatiques, et de leurs mélanges, le solvant S1 étant en particulier choisi parmi le dichlorométhane, l'acétate d'éthyle, l'acétate de butyle, le tétrahydrofurane, l'acétronitrile, le diéthyléther, et leurs mélanges.

6. Procédé selon l'une quelconque des revendications 1 à 5, dans lequel le nombre d'extractions variant en particulier de 2 à 10.

7. Procédé selon l'une quelconque des revendications 1 à 6, dans lequel, lors de l'étape c), les phases organiques formées lors de l'étape b) sont rassemblées et concentrées par évaporation à une température comprise entre 30°C et 100°C, de préférence entre 40°C et 90°C, et à une pression comprise entre 200 mbar abs et 0,5 mbar abs.

8. Procédé selon l'une quelconque des revendications 1 à 7, dans lequel la phase organique séparée de la solution aqueuse extraite à l'étape a) n'est pas réintroduite dans les étapes ultérieures b) à d) du procédé, en particulier elle n'est pas combinée avec les phases organiques extraites lors de l'étape b).

9. Procédé selon l'une quelconque des revendications 1 à 8, dans lequel le sel de lithium de bis(fluorosulfonyl)imide obtenu à l'issue de l'étape c) comprend moins de 10% en poids de solvant résiduel, de préférence moins de 5% en poids.

10. Procédé selon l'une quelconque des revendications 1 à 9, dans lequel, lors de l'étape d), le sel de lithium de bis(fluorosulfonyl)imide est cristallisé à froid à une température inférieure ou égale à 25°C, éventuellement dans un solvant organique S3 choisi parmi les solvants chlorés, tel que par exemple le dichlorométhane, et les solvants aromatiques, tel que par exemple le toluène, ledit sel étant éventuellement récupéré par filtration.

11. Procédé de fabrication d'un sel de lithium de bis(fluorosulfonyl)imide comprenant les étapes suivantes :
i. synthèse du bis(chlorosulfonyl)imide à partir de l'acide sulfamique ;
ii. fluoration du bis(chlorosulfonyl)imide en bis(fluorosulfonyl)imide, et
iii. préparation du sel alcalin ou alcalino-terreux de bis(fluorosulfonyl)imide par neutralisation du bis(fluorosulfonyl)imide, en particulier à l'aide d'une solution aqueuse d'une base choisie parmi les carbonates de métaux alcalins ou alcalino-terreux, et les hydroxydes de métaux alcalins ou alcalino-terreux,
iv. échange de cation pour obtenir un sel de lithium de bis(fluorosulfonyl)imide ; et
v. procédé de séchage et purification selon l'une quelconque des revendications 1 à 10.

12. Sel de lithium de bis(fluorosulfonyl)imide comprenant une teneur massique en eau comprise entre 5 et 45 ppm et une teneur massique en ions sulfate inférieure ou égale à 200 ppm en masse par rapport à la masse totale dudit sel.

13. Sel de lithium de bis(fluorosulfonyl)imide selon l'une quelconque des revendications 12, comprenant :
- une teneur massique en eau comprise entre 5 et 45 ppm en masse par rapport à la masse totale dudit sel ;
- une teneur massique en ions sulfate inférieure ou égale à 200 ppm en masse par rapport à la masse totale dudit sel ; et
- une teneur massique en Cl⁻ inférieure ou égale à 50 ppm en poids ;
- une teneur massique en F⁻ inférieure ou égale à 200 ppm, de préférence inférieure ou égale à 50 ppm ;
- une teneur massique en FSO₃Li inférieure ou égale à 200 ppm ;
- une teneur massique en FSO₂NH₂ inférieure ou égale à 200 ppm ;
- une teneur massique en CO₃²⁻ inférieure ou égale à 50 ppm ;
- une teneur massique en ClO₃⁻ inférieure ou égale à 50 ppm ;
- une teneur massique en ClO₄⁻ inférieure ou égale à 50 ppm ;
- une teneur massique en NO₂⁻ inférieure ou égale à 50 ppm ;
- une teneur massique en NO₃⁻ inférieure ou égale à 50 ppm ;
- une teneur massique en Si inférieure ou égale à 40 ppm ;
- une teneur massique en Mg inférieure ou égale à 10 ppm ;
- une teneur massique en Fe inférieure ou égale à 10 ppm ;
- une teneur massique en Ca inférieure ou égale à 10 ppm ;
- une teneur massique en Pb inférieure ou égale à 10 ppm ;
- une teneur massique en Cu inférieure ou égale à 10 ppm ;
- une teneur massique en Cr inférieure ou égale à 10 ppm ;
- une teneur massique en Ni inférieure ou égale à 10 ppm ;
- une teneur massique en Al inférieure ou égale à 10 ppm ;
- une teneur massique en Zn inférieure ou égale à 10 ppm ; et
- une teneur massique en Na inférieure ou égale à 10 ppm.

14. Utilisation d'un sel selon l'une quelconque des revendications 12 à 13, dans des batteries Li-ion.

15. Utilisation selon la revendication 14 dans des appareils nomades, par exemple les téléphones portables, les appareils photos, les tablettes ou les ordinateurs portables, dans des véhicules électriques, ou dans le stockage d'énergie renouvelable (tel que le photovoltaïque ou l'éolien).

## Patentansprüche

1. Verfahren zur Trocknung und Aufreinigung eines Lithium-bis-(fluorsulfonyl)imid-Salzes, das in einem organischen Lösungsmittel S1 in Lösung vorliegt, wobei das Verfahren die folgenden Schritte umfasst:
a) Zusetzen von entionisiertem Wasser, um das Lithium-bis-(fluorsulfonyl)imid-Salz aufzulösen und zu extrahieren, wobei sich eine wässrige Lösung des Salzes bildet, wobei dieser Schritt vorzugsweise mindestens einmal wiederholt wird;
a') möglicherweise Aufkonzentrieren der wässrigen Lösung;
b) Extrahieren des Lithium-bis-(fluorsulfonyl)imid-Salzes, ausgehend von der wässrigen Lösung, mit einem organischen Lösungsmittel S2, wobei sich ein Azeotrop mit Wasser bildet und das Massenverhältnis von organischem Lösungsmittel S2 / Wasser bei der Extraktion im Bereich von 1/6 bis 1/1 liegen kann, wobei dieser Schritt mindestens einmal wiederholt wird;
c) Aufkonzentrieren des Lithium-bis-(fluorsulfonyl)imid-Salzes, indem das organische Lösung S2 und das Salz verdampft werden, und
d) möglicherweise Auskristallisierenlassen des Lithium-bis-(fluorsulfonyl)imid-Salzes.

2. Verfahren nach Anspruch 1, wobei es den Schritt a') des Aufkonzentrierens der wässrigen Lösung umfasst, um vorzugsweise eine wässrige Lösung zu erhalten, die einen Gehalt an Lithium-bis-(fluorsulfonyl)imid-Salz umfasst, welcher im Bereich von 20 % bis 80 %, vorzugsweise von 30 % bis 65 %, liegt.

3. Verfahren nach einem beliebigen der Ansprüche 1 oder 2, wobei der Schritt a) derart beschaffen ist, dass die Masse an entionisiertem Wasser mindestens einem Drittel, vorzugsweise mindestens der Hälfte der Masse der Ausgangslösung an Lithium-bis-(fluorsulfonyl)imid-Salz in dem organischen Lösungsmittel S1 entspricht.

4. Verfahren nach einem beliebigen der Ansprüche 1 bis 3, wobei das organische Lösungsmittel S2 aus der Gruppe ausgewählt ist, die aus den Estern, den Nitrilen, den Ethern, den chlorierten Lösungsmitteln, den aromatischen Lösungsmitteln und deren Mischungen besteht, wobei das organische Lösungsmittel S2 insbesondere aus der Gruppe ausgewählt ist, welche aus Methyl-t-butylether, Cyclopentylmethylether, Ethylacetat, Propylacetat, Butylacetat und deren Mischungen besteht, wobei es sich bei dem organischen Lösungsmittel S2 vorzugsweise um Butylacetat handelt.

5. Verfahren nach einem beliebigen der Ansprüche 1 bis 4, wobei das organische Lösungsmittel S1 aus der Gruppe ausgewählt ist, die aus den Estern, den Nitrilen, den Ethern, den chlorierten Lösungsmitteln, den aromatischen Lösungsmitteln und deren Mischungen besteht, wobei das organische Lösungsmittel S1 insbesondere aus Dichlormethan, Ethylacetat, Butylacetat, Tetrahydrofuran, Acetonitril, Diethylether und deren Mischungen besteht.

6. Verfahren nach einem beliebigen der Ansprüche 1 bis 5, wobei die Anzahl an Extraktionen insbesondere 2 bis 10 betragen kann.

7. Verfahren nach einem beliebigen der Ansprüche 1 bis 6, wobei die organischen Phasen, welche im Schritt b) gebildet wurden, im Schritt c) vereinigt und durch Eindampfen bei einer Temperatur, welche im Bereich von 30 °C bis 100 °C, vorzugsweise von 40 °C bis 90 °C, liegt, und bei einem Druck, welcher im Bereich von 200 mbar abs. und 0,5 mbar abs. liegt, aufkonzentriert werden.

8. Verfahren nach einem beliebigen der Ansprüche 1 bis 7, wobei die organische Phase, welche im Schritt a) von der extrahierten wässrigen Lösung getrennt wurde, in den nachfolgenden Schritten b) bis d) des Verfahrens nicht wieder zugesetzt wird, wobei sie insbesondere nicht mit den organischen Phasen vereinigt wird, welche im Schritt b) extrahiert wurden.

9. Verfahren nach einem beliebigen der Ansprüche 1 bis 8, wobei das Lithium-bis-(fluorsulfonyl)imid-Salz, welches nach Abschluss des Schrittes c) erhalten wird, weniger als 10 Gewichts-% an restlichem Lösungsmittel, vorzugsweise weniger als 5 Gewichts-%, umfasst.

10. Verfahren nach einem beliebigen der Ansprüche 1 bis 9, wobei das Lithium-bis-(fluorsulfonyl)imid-Salz im Schritt d) in der Kälte bei einer Temperatur von höchstens 25 °C auskristallisieren gelassen wird, möglicherweise in einem organischen Lösungsmittel S3, das aus den chlorierten Lösungsmitteln, wie beispielsweise Dichlormethan, und den aromatischen Lösungsmitteln, wie beispielweise Toluol, ausgewählt ist, wobei das Salz möglicherweise durch Filtration gewonnen wird.

11. Verfahren zur Herstellung eines Lithium-bis-(fluorsulfonyl)imid-Salzes, das die folgenden Schritte umfasst:
i. Synthese von bis-(Chlorsulfonyl)imid ausgehend von Amidosulfonsäure;
ii. Fluorieren des bis-(Chlorsulfonyl)imids zu bis-(Fluorsulfonyl)imid, und
iii. Herstellen des Alkali- oder Erdalkalisalzes von bis-(Fluorsulfonyl)imid durch Neutralisierung des bis-(Fluorsulfonyl)imids, insbesondere mittels einer wässrigen Lösung einer Base, die aus den Carbonaten von Alkali- oder Erdalkalimetallen und den Hydroxiden von Alkali- oder Erdalkalimetallen ausgewählt ist,
iv. Kationenaustausch, um ein Lithium-bis-(fluorsulfonyl)imid-Salz zu erhalten; und
v. Trocknungs- und Aufreinigungsverfahren nach einem beliebigen der Ansprüche 1 und 10.

12. Lithium-bis-(fluorsulfonyl)imid-Salz, das einen massenbezogenen Wassergehalt im Bereich von 5 bis 45 ppm und einen massenbezogenen Gehalt an Sulfationen von höchstens 200 ppm nach Masse umfasst, unter Bezugnahme auf die Gesamtmasse des Salzes.

13. Lithium-bis-(fluorsulfonyl)imid-Salz nach einem beliebigen der Ansprüche 12, umfassend:
- einen massenbezogenen Gehalt an Wasser im Bereich von 5 bis 45 ppm nach Masse, unter Bezugnahme auf die Gesamtmasse des Salzes;
- einen massenbezogen Gehalt an Sulfationen von höchstens 200 ppm nach Masse, unter Bezugnahme auf die Gesamtmasse des Salzes; und
- einen massenbezogenen Gehalt an Cl⁻ von höchstens 50 ppm nach Gewicht;
- einen massenbezogenen Gehalt an F⁻ von höchstens 200 ppm, vorzugsweise von höchstens 50 ppm;
- einen massenbezogenen Gehalt an FSO₃Li von höchstens 200 ppm;
- einen massenbezogenen Gehalt an FSO₂NH₂ von höchstens 200 ppm;
- einen massenbezogenen Gehalt an CO₃²⁻ von höchstens 50 ppm;
- einen massenbezogenen Gehalt an ClO₃⁻ von höchstens 50 ppm;
- einen massenbezogenen Gehalt an ClO₄⁻ von höchstens 50 ppm;
- einen massenbezogenen Gehalt an NO₂⁻ von höchstens 50 ppm;
- einen massenbezogenen Gehalt an NO₃⁻ von höchstens 50 ppm;
- einen massenbezogenen Gehalt an Si von höchstens 40 ppm;
- einen massenbezogenen Gehalt an Mg von höchstens 10 ppm;
- einen massenbezogenen Gehalt an Fe von höchstens 10 ppm;
- einen massenbezogenen Gehalt an Ca von höchstens 10 ppm;
- einen massenbezogenen Gehalt an Pb von höchstens 10 ppm;
- einen massenbezogenen Gehalt an Cu von höchstens 10 ppm;
- einen massenbezogenen Gehalt an Cr von höchstens 10 ppm;
- einen massenbezogenen Gehalt an Ni von höchstens 10 ppm;
- einen massenbezogenen Gehalt an Al von höchstens 10 ppm;
- einen massenbezogenen Gehalt an Zn von höchstens 10 ppm; und
- einen massenbezogenen Gehalt an Na von höchstens 10 ppm.

14. Verwendung eines Salzes nach einem beliebigen der Ansprüche 12 bis 13 in Li-Ionen-Batterien.

15. Verwendung nach Anspruch 14 in nicht ortsgebundenen Geräten, zum Beispiel Mobiltelefonen, Fotoapparaten, Tablets oder Laptop-Computern, in elektrischen Fahrzeugen, oder zur Speicherungen erneuerbarer Energien (wie etwa aus Photovoltaik oder Windkraft).

## Claims

1. Process for drying and purifying a bis(fluorosulfonyl)imide lithium salt dissolved in an organic solvent S1, said process comprising the following steps:
a) addition of deionized water to dissolve and extract the bis(fluorosulfonyl)imide lithium salt, forming an aqueous solution of said salt, this step preferably being repeated at least once;
a') optional concentration of said aqueous solution;
b) extraction of the bis(fluorosulfonyl)imide lithium salt from said aqueous solution, with an organic solvent S2 forming an azeotropic mixture with water and organic solvent S2/water mass ratio, during extraction, ranging from 1/6 to 1/1, this step being repeated at least once;
c) concentration of the bis(fluorosulfonyl)imide lithium salt by evaporating off said organic solvent S2 and the water, and
d) optional crystallization of the bis(fluorosulfonyl)imide lithium salt.

2. Process according to Claim 1, comprising step a') of concentrating said aqueous solution, preferably to obtain an aqueous solution comprising a bis(fluorosulfonyl)imide lithium salt content of between 20% and 80%, preferentially between 30% and 65%.

3. Process according to either of Claims 1 and 2, in which step a) is such that the mass of deionized water is greater than or equal to one third, preferably greater than or equal to half, of the mass of the initial solution of the bis(fluorosulfonyl)imide lithium salt in the organic solvent S1.

4. Process according to any one of Claims 1 to 3, in which the organic solvent S2 is chosen from the group consisting of esters, nitriles, ethers, chlorinated solvents, aromatic solvents, and mixtures thereof, the organic solvent S2 being chosen in particular from the group consisting of methyl t-butyl ether, cyclopentyl methyl ether, ethyl acetate, propyl acetate, butyl acetate, and mixtures thereof, said organic solvent S2 preferentially being butyl acetate.

5. Process according to any one of Claims 1 to 4, in which the organic solvent S1 is chosen from the group consisting of esters, nitriles, ethers, chlorinated solvents, aromatic solvents, and mixtures thereof, the solvent S1 being chosen in particular from dichloromethane, ethyl acetate, butyl acetate, tetrahydrofuran, acetonitrile, diethyl ether, and mixtures thereof.

6. Process according to any one of Claims 1 to 5, in which the number of extractions ranges in particular from 2 to 10.

7. Process according to any one of Claims 1 to 6, in which, during step c), the organic phases formed during step b) are pooled and concentrated by evaporation at a temperature of between 30°C and 100°C, preferably between 40°C and 90°C, and at a pressure of between 200 mbar abs and 0.5 mbar abs.

8. Process according to any one of Claims 1 to 7, in which the organic phase separated from the aqueous solution extracted in step a) is not reintroduced into the subsequent steps b) to d) of the process, in particular it is not combined with the organic phases extracted during step b).

9. Process according to any one of Claims 1 to 8, in which the bis(fluorosulfonyl)imide lithium salt obtained on conclusion of step c) comprises less than 10% by weight and preferably less than 5% by weight of residual solvent.

10. Process according to any one of Claims 1 to 9, in which, during step d), the bis(fluorosulfonyl)imide lithium salt is cold-crystallized at a temperature of less than or equal to 25°C, optionally in an organic solvent S3 chosen from chlorinated solvents, for instance dichloromethane, and aromatic solvents, for instance toluene, said salt optionally being recovered by filtration.

11. Process for manufacturing a bis(fluorosulfonyl)-imide lithium salt, comprising the following steps:
i. synthesis of bis(chlorosulfonyl)imide from sulfamic acid;
ii. fluorination of the bis(chlorosulfonyl)imide to bis(fluorosulfonyl)imide, and
iii. preparation of the bis(fluorosulfonyl)imide alkali metal or alkaline-earth metal salt by neutralization of the bis(fluorosulfonyl)imide, in particular using an aqueous solution of a base chosen from alkali metal or alkaline-earth metal carbonates, and alkali metal or alkaline-earth metal hydroxides,
iv. cation exchange to obtain a bis(fluorosulfonyl)-imide lithium salt; and
v. drying and purification process according to any one of Claims 1 to 10.

12. Bis(fluorosulfonyl)imide lithium salt comprising a mass content of water of between 5 and 45 ppm and a mass content of sulfate ions of less than or equal to 200 ppm by mass relative to the total mass of said salt.

13. Bis(fluorosulfonyl)imide lithium salt according to any one of Claims 12, comprising:
- a mass content of water of between 5 and 45 ppm by mass relative to the total mass of said salt;
- a mass content of sulfate ions of less than or equal to 200 ppm by mass relative to the total mass of said salt; and
- a mass content of Cl⁻ of less than or equal to 50 ppm by weight;
- a mass content of F⁻ of less than or equal to 200 ppm, preferably less than or equal to 50 ppm;
- a mass content of FSO₃Li of less than or equal to 200 ppm;
- a mass content of FSO₂NH₂ of less than or equal to 200 ppm;
- a mass content of CO₃²⁻ of less than or equal to 50 ppm;
- a mass content of ClO₃⁻ of less than or equal to 50 ppm;
- a mass content of ClO₄⁻ of less than or equal to 50 ppm;
- a mass content of NO₂⁻ of less than or equal to 50 ppm;
- a mass content of NO₃⁻ of less than or equal to 50 ppm;
- a mass content of Si of less than or equal to 40 ppm;
- a mass content of Mg of less than or equal to 10 ppm;
- a mass content of Fe of less than or equal to 10 ppm;
- a mass content of Ca of less than or equal to 10 ppm;
- a mass content of Pb of less than or equal to 10 ppm;
- a mass content of Cu of less than or equal to 10 ppm;
- a mass content of Cr of less than or equal to 10 ppm;
- a mass content of Ni of less than or equal to 10 ppm;
- a mass content of Al of less than or equal to 10 ppm;
- a mass content of Zn of less than or equal to 10 ppm; and
- a mass content of Na of less than or equal to 10 ppm.

14. Use of a salt according to either of Claims 12 and 13, in Li-ion batteries.

15. Use according to Claim 14, in mobile appliances, for example cellphones, cameras, tablets or laptops, in electric vehicles, or in the storage of renewable energy (such as photovoltaic or wind energy).
